Europäisches Patentamt

European Patent Office

Office européen des brevets

(11) Veröffentlichungsnummer: **0 331 867**
**A2**

## (12) EUROPÄISCHE PATENTANMELDUNG

(21) Anmeldenummer: 89100257.8

(22) Anmeldetag: 09.01.89

(51) Int. Cl.⁴: **B23B 31/12**

(30) Priorität: 11.03.88 DE 3808155

(43) Veröffentlichungstag der Anmeldung:
13.09.89 Patentblatt 89/37

(84) Benannte Vertragsstaaten:
ES FR GB IT

(71) Anmelder: **Röhm, Günter Horst**
**Heinrich-Röhm-Strasse 50**
**D-7927 Sontheim(DE)**

(72) Erfinder: **Röhm, Günter Horst**
**Heinrich-Röhm-Strasse 50**
**D-7927 Sontheim(DE)**

(74) Vertreter: **Fay, Hermann, Dipl.-Phys. Dr. et al**
**Dipl.-Phys. Hermann Fay und Dr. Joachim**
**Dziewior Ensingerstrasse 21 Postfach 17 67**
**D-7900 Ulm/Donau(DE)**

(54) **Zum Anschluss an eine Bohrspindel eingerichtetes Bohrfutter.**

(57) Im Futterkörper (1) sind die Spannbacken (3) symmetrisch um die Drehachse (4) angeordnet und geneigt zur Drehachse geführt sind. Ein Spannring (2) ist drehbar und axial unverschiebbar am Futterkörper (1) gelagert und zum Verstellen der Spannbacken (3) mit einem Spanngewinde (7) versehen, das an jeder Spannbacke (3) mit einer an der Spannbacke (3) mit einer Zahnreihe (8) im Eingriff steht. Am Spannring (2) befindet sich eine Aufnahme (10) zum drehschlüssigen Anschluß der Bohrspindel. Gesehen in Richtung von der Bohrspindel zu den Spannbacken (3) besitzt das Spanngewinde (7) einen Drehsinn, durch den sich bei Rechtslauf des Spannrings (2) auf dem FutterKörper (1) die Spannbacken (3) im Sinne eines Spannens des Bohrwerkzeugs verstellen, wodurch das Bohrfutter selbst- und nachspannende Eigenschaften erhält.

Fig. 1

EP 0 331 867 A2

## Zum Anschluß an eine Bohrspindel eingerichtetes Bohrfutter.

Die Erfindung betrifft ein zum Anschluß an eine Bohrspindel eingerichtetes Bohrfutter mit zwischen sich eine Aufnahme für das Bohrwerkzeug bildenden Spannbacken, mit einem Futterkörper, in dem die Spannbacken symmetrisch um die Drehachse angeordnet und in zur Drehachse geneigter Richtung geführt sind, und mit einem koaxial zur Drehachse am Futterkörper angeordneten Spannring, der drehbar und axial unverschiebbar am Futterkörper gelagert ist und zum Verstellen der Spannbacken in deren Führungsrichtung ein mit der Drehachse koaxiales Spanngewinde aufweist, das an jeder Spannbacke mit einer an der Spannbacke vorgesehenen Zahnreihe im Eingriff steht.

Bohrfutter dieser Art sind beispielsweise aus DE 34 16 986 C2 bekannt. Bei ihnen befindet sich die Aufnahme für die Bohrspindel am Futterkörper und die Spannung des Bohrwerkzeugs erfolgt mit Hilfe eines am Futterkörper ansetzbaren Spannschlussels, der ein Zahnritzel aufweist, das in einen am Spannring vorgesehenen Zahnkranz eingreift. Mit Hilfe dieses Spannschlüssels kann über den Zahnkranz der Spannring zum Schließen oder Öffnen des Bohrfutters verdreht werden. Eine selbsttätige Nachspannung des Bohrwerkzeugs unter der Wirkung der im Bohrbetrieb entstehenden Kräfte ist bei diesem Bohrfutter nicht möglich.

Demgegenüber besitzen selbst- und nachspannende Bohrfutter einen grundsätzlich anderen Aufbau. Bei ihnen sind die Spannbacken in einem vom Futterkörper getrennten Backenhalter angeordnet und an der Kegelfläche eines Spannkonus des Spannrings geführt, so daß die Spannbacken durch eine axiale Relativverstellung zwischen dem Spannkonus und dem Backenhalter radial zur Achse der Werkzeugaufnahme verstellbar sind. Zur axialen Relativverstellung ist der Backenhalter mit einem zentralen Gewindebolzen in dem am Futterkörper vorgesehenen Spanngewinde verdrehbar. Der Backenhalter, die Spannbacken und der Spannring sind drehschlüssig miteinander verbunden. Bei einem solchen beispielsweise aus DE 28 15 026 A1 bekannten Bohrfutter ist ein Spannen sowohl von Hand mit Hilfe des Spannrings als auch im Sinne eines selbsttätigen Nachspannens während des Bohrbetriebs durch die Reaktionsmomente des Bohrwerkzeugs möglich, indem der Drehwiderstand des Bohrwerkzeugs über die Spannbacken an dem mit ihnen drehschlüssig verbundenen Backenhalter in gleicher Weise wie der Spannring eine Spannbewegung bewirkt.

Der Erfindung liegt die Aufgabe zugrunde, ein Bohrfutter der eingangs genannten Art so auszubilden, daß es selbstbzw. nachspannende Eigenschaften besitzt, also ohne Spannschlüssel von Hand gespannt werden und sich im Bohrbetrieb selbsttätig nachspannen kann, wobei das Bohrfutter im Vergleich zu üblichen selbst- und nachspannenden Bauformen im konstruktiven Aufbau besonders einfach ist.

Diese Aufgabe wird nach der Erfindung dadurch gelöst, daß der Spannring das von den Spannbacken abgewandte Ende des Futterkörpers zur Bohrspindel hin übergreift und mit einer Aufnahme zum drehschlüssigen Anschluß der Bohrspindel versehen ist und daß - gesehen in Richtung von der Bohrspindel zu den Spannbacken - das Spanngewinde einen Drehsinn besitzt, durch den sich bei Rechtslauf des Spannrings auf dem Futterkörper die Spannbacken im Sinne eines Spannen des Bohrwerkzeugs verstellen.

Dadurch wird erreicht, daß das Drehmoment der Bohrspindel vom Spannring über das Spanngewinde auf den Futterkörper und über die in ihm geführten Spannbacken auf das Bohrwerkzeug übertragen wird, das Drehmoment also den Spannring und das Spanngewinde im Sinne eines Spannens des Bohrwerkzeugs beaufschlagt. Das Reaktionsmoment des Bohrwerkzeugs führt daher zur selbsttätigen Nachspannung des Bohrers. Trotz dieser selbst- und nachspannenden Wirkung besitzt das erfindungsgemäße Bohrfutter einen sehr einfachen Aufbau, nämlich im wesentlichen den eines üblichen einfachen Zahnkranzfutters aus lediglich Futterkörper, Spannbacken und Spannring, wobei es sich vom Zahnkranzfutter allein darin unterscheidet, daß der Drehsinn des Spanngewindes umgekehrt und das Bohrfutter mit dem Spannring statt dem Futterkörper an die Bohrspindel anzuschließen ist.

In einfachster Ausführungsform kann die Anordnung so getroffen werden, daß der Spannring aus einer die Aufnahme für die Bohrspindel aufweisenden Spannhülse und einem umfangsmäßig hälftig geteilten Gewindering besteht, daß das Spanngewinde am Gewindering ausgebildet ist, und daß die Hälften des Gewinderings in einer Führungsbohrungen für die Spannbacken anschneidenden Ringnut des Futterkörpers geführt und durch die Spannhülse form- und kraftschlüssig zusammen gehalten sind. Zweckmäßig kann dabei der Gewindering in der Ringnut axial unverstellbar gehalten und die Spannhülse im Bereich der Aufnahme für die Bohrspindel am Ende des Futterkörpers zusätzlich geführt sein.

Eine andere bevorzugte Ausführungsform ist dadurch gekennzeichnet, daß der Spannring einen ungeteilten einstückigen Gewindering besitzt, an dem das Spanngewinde ausgebildet ist, daß der Futterkörper im Bereich zwischen dem Gewindering und dem bohrspindelseitigen Futterkörperende im Außendurchmesser überall höchstens gleich dem Innendurchmesser des Gewinderings ist, und daß der Spannring am Futterkörper in einer Zylinderfläche geführt ist, in der am Spannring und am Futterkörper einander radial gegenüber liegende Ringnuten vorgesehen sind, die sich gegenseitig zu einem Ringkanal ergänzen, in dem sich mindestens ein den Spannring gegen Axialverschiebungen am Futterkörper sperrendes Sicherungsglied befindet. Der bei dieser Ausführungsform ungeteilte, also nicht aus zwei Ringhälften ausgebildete Gewindering braucht nicht gehärtet zu werden und kann im Ergebnis wesentlich einfacher und dennoch sehr genau hergestellt und am Futterkörper dadurch montiert werden, daß er vom bohrspindelseitigen Ende her axial über den Futterkörper geschoben wird. Zweckmäßig befindet sich die Zylinderfläche im Bereich des bohrspindelseitigen Endes des Futterkörpers, so daß der Abstand zwischen der Zylinderfläche und dem Spanngewinde zum Vorteil einer guten Führung des Spannrings möglichst groß ist. Die Fuhrungs- und Rundlaufverhältnisse des Spannringes können noch dadurch weiter verbessert werden, daß der Gewindering bohrerseitig axial vor dem Spanngewinde eine zylindrische Innenfläche aufweist, mit der er an einer entsprechenden Außenfläche des Futterkörpers geführt ist. Die Sicherung des Spannrings am Futterkörper kann auf verschiedene Weise erfolgen. Vorzugsweise empfiehlt es sich, daß der Ringkanal und die Sicherungsglieder ein Kugellager bilden, wozu der Ringkanal als Lagerkanal ausgebildet ist, in dem die Sicherungsglieder in Form von Lagerkugeln umlaufen, und daß in der Wand des Spannrings eine verschließbare radiale Füllöffnung vorgesehen ist, die im Ringkanal mündet und durch die hindurch die Lagerkugeln in den Ringkanal einfuhrbar sind. Die geringen Verluste des Kugellagers haben zur Folge, daß das Drehmoment der Bohrspindel voll am Spanngewinde zur Nachspannung zur Verfügung steht.

Nach einem weiteren Vorschlag der Erfindung ist der Spannring, so lange er sich am Futterkörper in einem gegen Axialverschiebungen noch ungesicherten Zustand befindet, für Montagezwecke über seine Lage im gesicherten Zustand hinaus axial zum Bohrer hin verschiebbar, bis sich das Spanngewinde außer Eingriff mit den Zahnreihen der Spannbacken befindet. Dadurch wird die Montage des ungeteilten Spannrings wesentlich erleichtert und beschleunigt. Bei vorgeschobenem Spannring können die Spannbacken von vorn her in den Futterkörper eingesetzt werden. Wird anschließend der Spannring in seine endgültige Lage zurückgezogen, beginnt sein Spanngewinde an den Spannbacken zu greifen, wodurch die Spannbacken vom Spannring automatisch mit in ihre endgültige und am Spannring voll im Eingriff stehende Position gezogen werden.

Im folgenden wird die Erfindung an in der Zeichnung dargestellten Ausführungsbeispielen näher erläutert; es zeigen:

Fig. 1 einen Axialschnitt durch ein Bohrfutter mit geteiltem Gewindering,

Fig. 2 einen Axialschnitt durch ein Bohrfutter mit ungeteiltem Gewindering.

In der Zeichnung ist der Futterkörper mit 1 und der Spannring mit 2 bezeichnet. Die üblicherweise zu dritt über den Umfang des Bohrfutters verteilten und zwischen sich eine Aufnahme für das nicht dargestellte Bohrwerkzeug bildenden Spannbacken tragen die Bezugsziffer 3. Die Spannbacken 3 sind symmetrisch um die Drehachse 4 des Bohrfutters im Futterkörper 1 angeordnet und in zur Drehachse 4 geneigter Richtung in Bohrungen 5 des Futterkörpers 1 geführt, so daß die Achsen 6 der Führungsbohrungen 5 nach vorn, d. h. zum Bohrwerkzeug hin, zusammen laufen. Der Spannring 2 ist koaxial zur Drehachse 4 am Futterkörper 1 angeordnet. Er ist drehbar und axial unverschiebbar am Futterkörper 1 gelagert und zum Verstellen der Spannbacken 3 in deren Führungsrichtung mit einem mit der Drehachse 4 koaxialen Spanngewinde 7 versehen. Dieses Spanngewinde 7 steht an jeder Spannbacke 3 mit einer an der Spannbacke vorgesehenen Zahnreihe 8 im Eingriff, so daß eine Drehung des Spannrings 2 ein Verschieben der Spannbacke 3 in ihren Führungsbohrungen 5 ergibt. Die Spannbacken 3 sind im wesentlichen kreiszylindrische Bolzen, die auf der dem Spanngewinde 7 zugewandten Seite abgeflacht und dort mit der Zahnreihe 8 ausgestattet sind. Der Spannring 2 übergreift das von den Spannbacken 3 abgewandte Ende 9 des Futterkörpers 1 zur nicht dargestellten Bohrspindel hin und ist dort mit einer Aufnahme 10 zum drehschlüssigen Anschluß der Bohrspindel versehen. Diese Aufnahme 10 ist im Ausführungsbeispiel als Gewindenaufnahme ausgebildet. Außerdem ist der Futterkörper 1 in fluchtender Verlängerung dieser Aufnahme 10 mit einem Durchbruch 11 ausgestattet, durch den hindurch im Falle eines Betriebs des Bohrfutters an einem Bohrhammer die Schlagwirkung des Döppers unmittelbar auf das zwischen den Spannbacken 3 geführte Bohrwerkzeug übertragen werden kann. Weiter besitzt, gesehen in Richtung von der Bohrspindel zu den Spannbacken 3 hin, das Spanngewinde 7 einen Drehsinn, durch den sich bei Rechtslauf des Spannrings 2 auf dem Futterkörper 1 die Spannbacken 3 im Sinne eines Spannens des Bohrwerkzeugs verstellen. Beim Bohren versucht das Reaktionsmoment des Bohrwerkzeugs die Spannbacken 3 und mit ihnen den Futterkörper 1 entgegen der Antriebsrichtung der Bohrspindel aufzuhalten. Dieses Reaktionsmoment wird daher im Spanngewinde 7 zwischen den Spannbacken 3 einerseits und dem Spannring 2 andererseits voll im Sinne einer selbsttätigen Nachspannung wirksam.

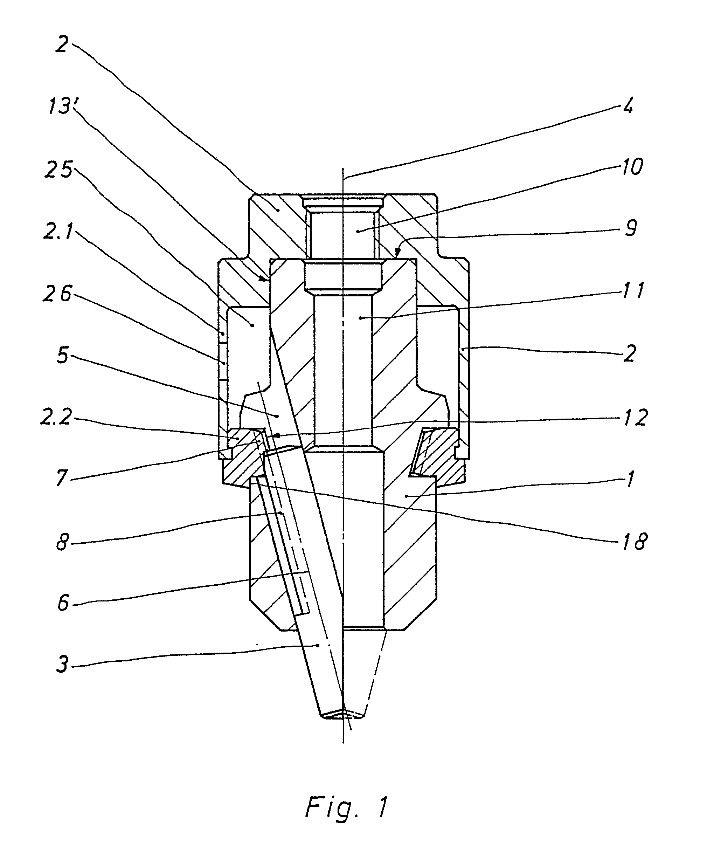

Im Ausführungsbeispiel nach Fig. 1 besteht der Spannring 2 aus einer die Aufnahme 10 für die Bohrspindel aufweisenden Spannhülse 2.1 und einem Gewindering 2.2, der, wie bei Zahnkranzfuttern üblich, umfangsmäßig hälftig geteilt ist. Das Spanngewinde 7 ist an diesem Gewindering 2.2 ausgebildet. Die Hälften des Gewinderings 2.2 sind in einer Ringnut 12 des Futterkörpers 1 geführt, die die Führungsbohrungen 5 für die Spannbacken 3 anschneidet, so daß der Gewindering 2.2 mit seinem Spanngewinde 7 an den Zahnreihen 8 der Spannbacken 3 zum Eingriff kommen kann.

Die Spannhülse 2.1 hält die beiden Hälften des Gewinderings 2.2 form- und kraftschlüssig zusammen. Der Gewindering 2.2 und mit ihm der Spannring 2 insgesamt ist in der Ringnut 12 axial unverstellbar gehalten. Außerdem ist die Spannhulse 2.1 am Ende 9 des Futterkörpers 1 zusätzlich geführt, so daß sich diese Führung im möglichst großen axialen Abstand vom Gewindering 2.2 befindet.

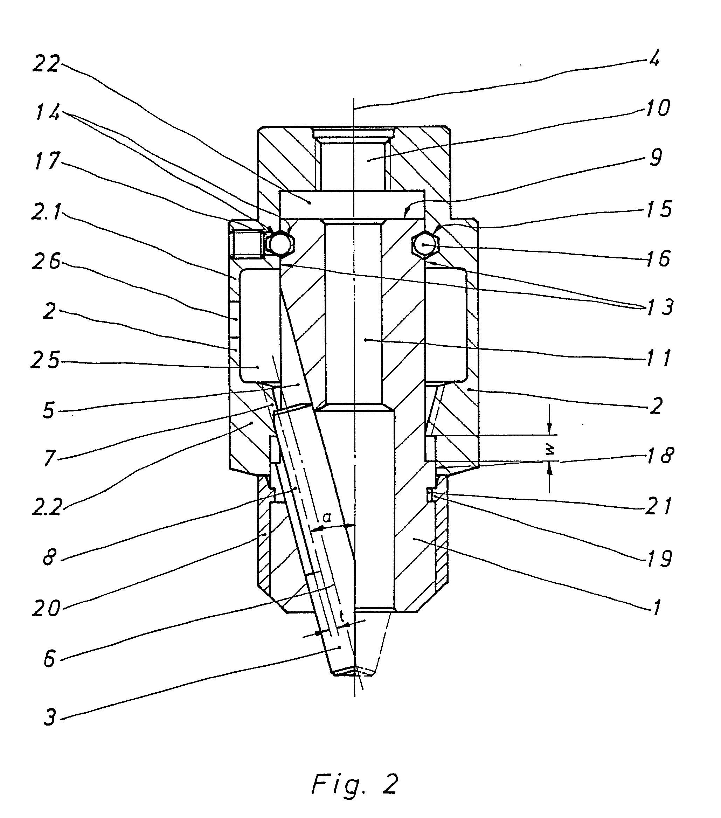

Im Ausführungsbeispiel nach Fig. 2 besitzt der Spannring 2 einen einteiligen und einstückig mit der Spannhulse 2.1 ausgebildeten Gewindering 2.2, an dem das Spanngewinde 7 ausgebildet ist. Der Futterkörper 1 ist im Bereich zwischen dem Gewindering 2.2 und dem bohrspindelseitigen Futterperende 9 im Außendurchmesser überall hochstens gleich dem Innendurchmesser des Gewinderings 2.2, so daß der Spannring 2 bei der Montage des Bohrfutters in der Zeichnung axial von oben her über den Futterkörper 1 geschoben werden kann. Der Spannring 2 ist am Futterkörper 1 in einer Zylinderfläche 13 geführt, in der am Spannring 2 und am Futterkörper 1 einander radial gegenuber liegende Ringnuten 14 vorgesehen sind, die sich gegenseitig zu einem Ringkanal 15 ergänzen. In diesem Ringkanal 15 befinden sich den Spannring 2 gegen Axialverschiebungen am Futterkörper 1 sperrende Sicherungsglieder 16. Dabei bilden der Ringkanal 15 und die Sicherungsglieder 16 ein Kugellager, wozu der Ringkanal 15 als Lagerkanal ausgebildet ist, in dem die Sicherungsglieder 16 in Form von Lagerkugeln umlaufen. In der Wand des Spannrings 2 ist eine verschließbare radiale Füllöffnung 17 vorgesehen, die im Ringkanal 15 mündet und durch die hindurch die Lagerkugeln in den Ringkanal eingeführt werden können.

Bohrerseitig ist der Gewindering 2.2 axial vor dem Spanngewinde 7 mit einer zylindrischen Innenfläche 18 ausgestattet, mit der der Gewindering 2.2 zusätzlich an einer entsprechenden Außenfläche des Futterkörpers 1 geführt ist. Zwischen dieser zylindrischen Innenfläche 18 und der das Kugellager aufweisenden Zylinderfläche 13, bzw. der in Fig. 1 entsprechenden Zylinderfläche 13′, befindet sich ein axial vergleichsweise großer Abstand, der gute Führungsverhältnisse des Spannrings 2 am Futterkörper 1 zur Folge hat.

So lange der Spannring 2 sich am Futterkörper 1 noch in einem gegen Axialverschiebungen ungesicherten Zustand befindet, beispielsweise in Fig. 2 die Lagerkugeln noch nicht in den Lagerkanal eingefüllt sind, kann der Spannring 2 für Montagezwecke über seine in Fig. 2 im gesicherten Zustand dargestellte Lage hinaus axial nach vorn zum Bohrer hin so weit verschoben werden, daß das Spanngewinde 7 außer Eingriff an den Zahnreihen 8 der Spannbacken 3 gelangt. Ist t die Eingriffstiefe des Spanngewindes 7 an den Zahnreihen 8 und a der Neigungswinkel zwischen den Achsen 6 der Führungsbohrungen 5 für die Spannbacken 3 und der Drehachse 4, so ist der axiale Verschiebungsweg w bis zur Aufhebung des Eingriffs zwischen dem Spannring 2 und den Spannbacken 3 gegeben durch

$w = t/\sin a.$

Um die Länge dieses Weges w muß also in Fig. 2 der Spannring 2 axial nach vorn verschiebbar sein, um die beschriebene Montagevereinfachung zu ermöglichen. Wird nämlich der Spannring 2 um w nach vorn verschoben, bewegen sich der Gewindering 2.2 einerseits und die Spannbakken 3 andererseits relativ zueinander um den Weg t senkrecht zur Achse 6 der Führungsbohrungen 5 auseinander, wodurch · der Gewindeeingriff zwischen dem Spannring 2 und den Spannbacken 3 aufgehoben wird. Um diese Verschiebung zu ermöglichen, ist axial zwischen dem Ende 9 des Futterkörpers 1 und dem Spannring 2 ein Leerraum 22 vorgesehen.

Im übrigen ist in Fig. 2 auf dem Futterkörper 1 vor dem Spannring 2 noch eine Hülse 20 angeordnet, die mit einer Rastnase 19 in einem Rastsitz 21 des Futterkörpers 1 gehalten ist. Diese Hülse 20 dient dem Zweck, die Austrittsöffnungen der Führungsbohrungen 5 für die Spannbacken 3 am Futterkörper 1 abzudecken, soweit diese Austrittsöffnungen nicht schon durch den Spannring 2 selbst verschlossen sind. Die Hülse 20 wird erst montiert, wenn der Spannring 2 fertig am Futterkörper 1 montiert ist, also die Lagerkugeln sämtlich in die Lagernut eingefüllt sind.

Zwischen der Zylinderfläche 13 und dem Gewindering 2.2 bildet die Spannhülse 2 einen leeren Ringraum 25, in den die Führungsbohrungen 5 münden. In diesem Ringraum kann sich Bohrschmutz sammeln und durch Reinigungsöffnungen 26 in der Wand des Spannrings 2 nach außen aus dem Futter austreten.

## Ansprüche

1. Zum Anschluß an eine Bohrspindel eingerichtetes Bohrfutter mit zwischen sich eine Aufnahme für das Bohrwerkzeug bildenden Spannbacken (3), mit einem Futterkörper (1), in dem die Spannbacken (3) symmetrisch um die Drehachse (4) angeordnet und in zur Drehachse (4) geneigter Richtung geführt sind, und mit einem koaxial zur Drehachse (4) am Futterkörper (1) angeordneten Spannring (2), der drehbar und axial unverschiebbar am Futterkörper (1) gelagert ist und zum Verstellen der Spannbacken (3) in deren Fuhrungsrichtung ein mit der Drehachse (4) koaxiales Spanngewinde (7) aufweist, das an jeder Spannbacke (3) mit einer an der Spannbacke (3) vorgesehenen Zahnreihe (8) im Eingriff steht, dadurch gekennzeichnet, daß der Spannring (2) das von den Spannbacken (3) abgewandte Ende (9) des Futterkörpers (1) zur Bohrspindel hin übergreift und mit einer Aufnahme (10) zum drehschlüssigen Anschluß der Bohrspindel versehen ist und daß - gesehen in Richtung der Bohrspindel zu den Spannbacken (3) - das Spanngewinde (7) einen Drehsinn besitzt, durch den sich bei Rechtslauf des Spannrings (2) auf dem Futterkörper (1) die Spannbacken (3) im Sinne eines Spannens des Bohrwerkzeugs verstellen.

2. Bohrfuter nach Anspruch 1, dadurch gekennzeichnet, daß der Spannring (2) aus einer die Aufnahme (10) für die Bohrspindel aufweisenden Spannhülse (2.1) und einem umfangsmäßig hälftig geteilten Gewindering (2.2) besteht, daß das Spanngewinde (7) am Gewindering (2) ausgebildet ist, und daß die Hälften des Gewinderings (2.2) in einer Führungsbohrungen (5) für die Spannbacken (3) anschneidenden Ringnut (12) des Futterkörpers (1) geführt und durch die Spannhülse (2) formund kraftschlüssig zusammen gehalten sind.

3. Bohrfutter nach Anspruch 2, dadurch gekennzeichnet, daß der Gewindering (2.2) in der Ringnut (12) axial unverstellbar gehalten ist.

4. Bohrfutter nach Anspruch 2 oder 3, dadurch gekennzeichnet, daß die Spannhülse (2) im Bereich der Aufnahme (10) für die Bohrspindel am Ende (9) des Futterkörpers (1) geführt ist.

5. Bohrfutter nach Anspruch 1, dadurch gekennzeichnet, daß der Spannring (2) einen einstükkigen Gewindering (2.2) besitzt, an dem das Spanngewinde (7) ausgebildet ist, daß der Futterkörper (1) im Bereich zwischen dem Gewindering (2.2) und dem bohrspindelseitigen Futterkörperende (9) im Außendurchmesser überall höchstens gleich dem Innendurchmesser des Gewinderings (2.2) ist, und daß der Spannring (2) am Futterkörper (1) in einer Zylinderfläche (13) geführt ist, in der am Spannring (2) und am Futterkörper (1) einander radial gegenuber liegende Ringnuten (14) vorgesehen sind, die sich gegenseitig zu einem Ringkanal (15) ergänzen, in dem sich mindestens ein den Spannring (2) gegen Axialverschiebungen am Futterkörper (1) sperrendes Sicherungsglied (16) befindet.

6. Bohrfutter nach Anspruch 5, dadurch gekennzeichnet, daß die Zylinderfläche (13) im Bereich des bohrspindelseitigen Endes (9) des Futterkörpers (1) vorgesehen ist.

7. Bohrfutter nach Anspruch 5 oder 6, dadurch gekennzeichnet, daß der Ringkanal (15) und die Sicherungsglieder (16) ein Kugellager bilden, wozu der Ringkanal (15) als Lagerkanal ausgebildet ist, in dem die Sicherungsglieder (16) in form von Lagerkugeln umlaufen, und daß in der Wand des Spannrings (2) eine verschließbare radiale Füllöffnung (17) vorgesehen ist, die im Ringkanal (15) mündet und durch die hindurch die Lagerkugeln in den Ringkanal einfuhrbar sind.

8. Bohrfutter nach einem der Ansprüche 5 bis 7, dadurch gekennzeichnet, daß der Gewindering (2.2) bohrerseitig axial vor dem Spanngewinde (7) eine zylindrische Innenfläche (18) aufweist, mit der er an einer entsprechenden Außenfläche des Futterkörpers (1) geführt ist.

9. Bohrfutter nach einem der Ansprüche 5 bis 8, dadurch gekennzeichnet, daß der Spannring (2), so lange er sich am Futterkörper (1) in einem gegen Axialverschiebungen ungesicherten Zustand befindet, für Montagezwecke über seine Lage im gesicherten Zustand hinaus axial zum Bohrer hin verschiebbar ist, bis sich das Spanngewinde (7) außer Eingriff mit den Zahnreihen (8) der Spannbacken (3) befindet.

Fig. 1

Günter Horst Röhm

**Fig. 2**

Günter Horst Röhm